# EUROPEAN PATENT APPLICATION

(11) **EP 4 825 886 A1**
(43) Date of publication of application: **21.10.2026**
(21) Application number: 25305540.4
(22) Date of filing: 14.04.2025
(51) Int. Cl.: C08F 120/06, B01D 21/00, C02F 1/56, C08F 8/32, C08J 3/12, C08F 2/32, C08F 120/56

(54) **INTER-PENETRATED NETWORK OF WATER-SOLUBLE POLYMERS IN POWDER FORM FOR BAYER PROCESS**

(71) Applicant: SNF Group, 42160 Andrézieux-Bouthéon (FR)
(72) Inventor: TAVERNIER, Bruno, 42160 ANDREZIEUX-BOUTHEON (FR); BONNEAU, Aurélien, 42160 ANDREZIEUX-BOUTHEON (FR); KIEFFER, Johann, 42160 ANDREZIEUX-BOUTHEON (FR); FAVERO, Cédrick, 42160 ANDREZIEUX-BOUTHEON (FR); DARRAS, Sylvain, 42160 ANDREZIEUX-BOUTHEON (FR)
(74) Representative: Ipsilon

(57) **Abstract**

The invention relates to a method for preparing an interpenetrated network (IPN) in powder form used as flocculant in the Bayer process.

## Description

### FIELD OF INVENTION

The present invention concerns an interpenetrated network (IPN) in powder form used as flocculant in the Bayer process. More specifically, the invention concerns a method for preparing this IPN comprising the polymerization of hydrophilic monomer(s) in inverse emulsion in presence of a water-soluble hydroxamic acid polymer followed by a spray drying step. Another aspect of the invention is a Bayer process comprising the use of this IPN in powder form.

### PRIOR ART

Hydroxamic acids are a class of organic compounds having the structure R-CO-NHOH, where R represents an organic side chain.

Hydroxamic acids have interesting properties, particularly as metal complexing agents. Indeed, hydroxamic acid groups have a strong affinity for metal ions, forming stable complexes with various transition metals. This property is useful in mining applications such as metal separation and purification, especially for flotation.

Hydroxamates are used as collectors for the flotation of oxidized minerals such as iron oxides (hematite), copper oxides (cuprite, malachite) and zinc oxides (smithsonite). Hydroxamates form stable complexes with the metal cations present on the surface of these minerals, facilitating adhesion of the mineral particles to the air bubbles in the flotation cell.

Nevertheless, the hydroxamates used in flotation are small molecules with limited applications, particularly in the solid/liquid separation stages, which are essential in mining processes to concentrate either tailings or concentrates of interest. High molecular weight polymers bearing hydroxamic acid groups have been developed to flocculate iron particles in suspension.

Water-soluble hydroxamic acid polymers with a high molecular weight are commonly used as flocculants in the Bayer process. The hydroxamic acid group is highly selective to iron metal leading to improved overflow clarity in the red mud separation stage of the Bayer process.

The weight-average molecular weight of these water-soluble polymers is generally between 1 million Daltons and 50 million Daltons. These polymers are mainly obtained by solution or inverse emulsion polymerization. They are therefore used in solution or inverse emulsion form. Polymers in powder form can also be obtained from these solutions or inverse emulsions by implementing a drying step (*drum drying* for solution or *spray-drying* for emulsion).

Patent US 4,868,248 describes the synthesis of an aqueous acrylic acid homopolymer in which some of the carboxylic acid groups are converted to hydroxamic acid groups by reaction with free hydroxylamine at acidic pH and elevated temperatures. The polymers obtained are in liquid form, with a very limited molecular weight (less than 2 million Daltons), with a limiting active content to have a pumpable fluid.

Patent EP 0 314 855 describes the use of high molecular weight polymers for clarifying the red sludge generated by the Bayer process.

Patent US 4,902,751 describes the preparation of hydroxamic acid-functionalized polymers, obtained by reacting an acrylamide homopolymer with a hydroxylamine salt at basic pH. The polymers obtained are either in the form of an aqueous solution (molecular weight less than 2 million Da), or in the form of an inverse emulsion (molecular weight greater than 15 million Da).

Patent EP 0 514 648 exclusively describes the synthesis of high molecular weight polymers comprising hydroxamate groups in inverse emulsion (same conditions as in patent US4902751).

Patent US 5,368,745 describes the use of polymers containing hydroxamic acid groups obtained using the process described in the US4902751 patent for the selective flocculation of iron oxides in ore mixtures.

Patent US 5,688,403 describes the use in combination of a cationic polymer and a polymer in liquid comprising hydroxamic acid pendant groups to remove metal ions (Cu/ Pb/ Zn/ Ni) from an aqueous solution.

Patent US 8,685,256 describes a method for preparing a high molecular weight polymer comprising hydroxamic acid groups in inverse emulsion with a polymer concentration increased compared with the state of the art (greater than 20%) and its use as a flocculant for red mud.

Patent WO 97/48732 describes a process for preparing polymers containing hydroxamic acid groups in powder form by spray-drying an inverse emulsion. No application data on the polymer's performance in the Bayer process is described.

The patent US 5,539,046 describes the use of a blend of two inverse emulsions containing respectively a polymer containing hydroxamic acid groups and a polyacrylate, with specific polymer ratios. The blend simplifies addition of these two polymers for the Bayer process.

Thus, the current state of the art describes numerous methods for preparing polymers comprising hydroxamic acid groups, in liquid or inverse emulsion form.

The growing demand for eco-design makes these hydroxamate-functionalized polymers uncompetitive. Firstly, emulsion or solution formulations require a lot of energy and costly transport logistics (diluted polymer). Secondly, the emulsion form has the disadvantage of introducing an oily phase into the Bayer process, to the detriment of environmental impact (emission of volatile organic compounds (VOCs) and Chemical Oxygen Demand / Biochemical Oxygen demand (COD/BOD) from the aqueous effluent discharged by aluminum smelters). The oil accumulated in the Bayer process is also subject to degradation and the formation of humic acid, which reduces performance. Finally, existing dry forms require energy-intensive drying processes that are likely to degrade the polymer at least partially. There is therefore a need for high molecular weight hydroxamic acid polymers in particulate form, with a reduced design carbon footprint for transport and operation.

Blends of hydroxamic acid polymer with another (co)polymers are only described by mixing inverse emulsions of these two polymers. So, this blends cumulate impact of oily phase of these two inverse emulsions.

### DESCRIPTION OF THE INVENTION

Unexpectedly, the Applicant has discovered that an interpenetrated polymer network (IPN) in powder form prepared by polymerization of hydrophilic monomer(s) in an inverse emulsion in presence of a hydroxamic acid polymer followed by spray-drying of the resultant inverse emulsion of IPN, could address previously described eco-design issue, and improve polymer's performance in the Bayer process.

More precisely, the invention deals with a method for preparing an interpenetrated polymer network (IPN) in powder form, comprising the following successive step:
A) Preparing an inverse emulsion **EMI-1** of an IPN by polymerization of one or more hydrophilic anionic monomer(s) and optionally one or more hydrophilic non-ionic monomers in the presence of a water-soluble hydroxamic acid polymer **P1;**
   wherein polymer **P1** has an average molecular weight Mw equal to or greater than 1 million Dalton;
   wherein the polymerization is carried out at a temperature of between 40°C and 60°C during 30 minutes and 60 minutes;
B) Optionally, preparing an inverse emulsion **EMI-2** by adding and mixing a lipophilic phase to the inverse emulsion **EMI-1;**
C) Spray-drying the inverse emulsion **EMI-1 or EMI-2** to form an IPN in powder form.

The invention also relates to a Bayer process for extracting alumina from bauxite, with the IPN in powder form obtained by the method previously described.

The invention includes all possible combinations of the various embodiments disclosed, whether they are preferred embodiments or given by way of example. Furthermore, when ranges of values are indicated, the limit values are included in these ranges. The disclosure also includes all of the combinations between the limit values of these ranges of values. For example, the ranges of values "1-20, preferably 5-15" imply disclosure of the ranges "1-5", "1-15", "5-20" and "15-20" and the values 1, 5, 15 and 20.

"Polymer" means a homopolymer prepared from a hydrophilic monomer or a copolymer prepared from at least two different monomers, it may therefore be a copolymer of at least two monomers chosen from among: anionic hydrophilic monomers, non-ionic hydrophilic monomers, and their mixtures.

Interpenetrated Polymer Network (IPN) is a polymer composition containing at least two polymers, which form a network wherein at least one of the polymers (Pₘₒₙ) is synthesized in the presence of at least another polymer (Pₚₒₗ). This results in a physically cross-linked network in which polymer chains of the second polymer (Pₘₒₙ) are entangled with or penetrate the polymer chains of a first polymer (Pₚₒₗ).

The polymer **P1** used in the process of the invention has a molecular weight Mw of at least 1 million Daltons, preferably between 1 and 40 million Daltons, more preferably between 1 and 30 million Daltons, more preferably between 2 and 20 million Daltons, and even more preferably between 3 and 15 million Daltons. Molecular weight Mw is defined as weight-average molecular weight.

The molecular weight Mw is advantageously determined by the intrinsic viscosity of the polymer. The intrinsic viscosity can be measured by methods known to a person skilled in the art and can be calculated from the reduced viscosity values for different polymer concentrations by a graphical method consisting in plotting the reduced viscosity values (y-axis) against the concentration (x-axis) and extrapolating the curve to zero concentration. The intrinsic viscosity value is plotted on the y-axis or using the least-squares method. The molecular weight can then be determined using the Mark-Houwink equation:$\left[η\right] = K . {Mw}^{α}$
[η] represents the intrinsic viscosity of the polymer as determined by the solution viscosity method.
K represents an empirical constant.
Mw represents the molecular weight of the polymer.
α represents the Mark-Houwink coefficient.
K and α depend on the polymer-solvent system.

The term "water-soluble polymer" should be understood to mean a polymer that gives an aqueous solution without insoluble particle, when it is dissolved under stirring at 25°C and with a concentration of 10 g.L⁻¹ in deionised water.

The term "hydrophilic monomer" should be understood to mean a monomer that has an octanol-water partition coefficient, K_{ow}, less than or equal than 1, in which the partition coefficient K_{ow} is determined at 25°C in an octanol-water mixture with a volume ratio of 1/1, at a pH of between 6 and 8.

### Step A

The method of the invention comprises a first step of preparing an inverse emulsion **EMI-1** of an IPN by polymerization of one or more hydrophilic anionic monomer(s) and eventually one or more hydrophilic non-ionic monomer(s) in the presence of a water-soluble hydroxamic acid polymer **P1.**

### Polymer P1

Polymer **P1,** also referred as host or base polymer, is a water-soluble hydroxamic acid polymer.

Due to the presence of hydroxamic acid moieties on the polymer, polymer **P1** is typically an anionic water-soluble polymer containing one or more non-ionic hydrophilic monomer(s).

Preferably, the non-ionic hydrophilic monomer is (meth)acrylamide.

The hydroxamic acid polymer results from the reaction of amide groups -C(O)-NH₂, such as present in (meth)acrylamide, or carboxylate groups -C(O)ONa, such as present in sodium (meth)acrylate, with hydroxylamine NH₂OH or one of its salts.

Preferably, the hydroxylamine salt is hydroxylamine sulfate or hydroxylamine chloride.

Polymer **P1** may further comprise one or more hydrophilic anionic monomer(s) such as (meth)acrylic acid or the sodium salt thereof.

Anionic hydrophilic monomers sodium (meth)acrylate may result from the hydrolysis of (meth)acrylamide during the formation of hydroxamate and/or polymerization of (meth)acrylic acid.

The polymer **P1** is advantageously linear or may be structured by a structuring agent. By structured polymer is meant a non-linear polymer, for instance branched, star-shaped or comb-shaped polymer.

The structuring agent is advantageously chosen from:
- structuring agents advantageously chosen from the group comprising polyethylenically unsaturated compounds (having, as a minimum, two unsaturated functions) different from the monomers previously described, like for example, vinyl functions, in particular, allylic or acrylic, and, for example, methylene bis acrylamide (MBA), triallylamine, tetraallylammonium chloride or 1,2 dihydroxyethylene bis-(N-acrylamide) can be cited,
- compounds having at least two epoxy functions,
- compounds having at least one unsaturated function and an epoxy function,
- macro-initiators such as polyperoxides, polyazoics and transfer polyagents, such as polymercaptan polymers, and polyols,
- functionalized polysaccharides,
- water-soluble metal complexes composed:
   * of a metal of valence greater than 3 such as, as an example and in a non-limiting manner, aluminium, boron, zirconium, or also titanium, and
   * of a ligand carrying a hydroxyl function.

The quantity of structuring agent in the polymer **P1** is advantageously less than 1 000 ppm by weight relative to the total weight of the monomers of the polymer, preferably less than 100 ppm by weight, and more preferably less than 10 ppm by weight.

When the polymer comprises at least one structuring agent, it remains water soluble. A person skilled in the art knows how to adjust the quantity of structuring agent and, possibly, the quantity of transfer agent needed to obtain this result.

In one embodiment, the polymer is free of structuring agent.

The polymer **P1** is advantageously in the form of an inverse emulsion **EMI-0** (water-in-oil). The inverse emulsion **EMI-0** comprises:
- an aqueous phase comprising the polymer **P1,**
- an oil phase and
- at least one emulsifying agent.

Preferably, when the polymer **P1** is in inverse emulsion **EMI-0,** the latter contains between 20 and 80 % by weight of polymer **P1,** more preferably between 20 and 50 % by weight.

The oil phase and the emulsifying agent are chosen in the lists described below for the emulsion **EMI-1.**

### Preparation of the IPN in inverse emulsion EMI-1

In step A, the IPN is prepared in an inverse emulsion **EMI-1** by polymerization of one or more hydrophilic anionic monomer(s) and, eventually one or more non-ionic monomers, in the presence of a water-soluble hydroxamic acid polymer **P1.**

The hydrophilic anionic monomer(s) to be polymerized may be selected from the group consisting of acrylic acid, methacrylic acid, dimethylacrylic acid, itaconic acid, C1 -C3 itaconic acid hemiesters, crotonic acid, maleic acid, fumaric acid,allylsulfonic acid, methallylsulfonic acid, 2-methylidenepropane-1,3-disulfonic acid, styrene sulfonic acid, 2-acrylamido-2-methylpropane sulfonic acid, 2-acrylamido-2-methylpropane disulfonic acid, 3-allyloxy-2-hydroxypropane sulfonic acid, the salts thereof and mixtures thereof.

The hydrophilic non-ionic monomer(s) may advantageously be selected from the group consisting of: water-soluble vinyl monomers, preferably from the group consisting of: acrylamide, methacrylamide, N-alkylacrylamides, N-alkylmethacrylamides, N,N-dialkyl acrylamides, N,N-dialkylmethacrylamides, alkoxylated esters of acrylic acid, alkoxylated esters of methacrylic acid, N-vinylpyrrolidone, N-methylol(meth)acrylamide, N-vinyl caprolactam, N-vinylformamide, N-vinyl acetamide, N-vinyl imidazole, N-vinyl succinimide, acryloyl morpholine, glycidyl methacrylate, glyceryl methacrylate, diacetone acrylamide, anyhydride methacrylic, acrylonitrile, anydride maleic, itaconamide, vinylpyridine, hydroxyalkyl (meth)acrylate, thioalkyl (meth)acrylate, isoprenol, alkoxylated derivatives of isoprenol, hydroxyethyl(meth)acrylates, alkoxylated derivatives of hydroxyethyl(meth)acrylates, hydroxypropylacrylate, alkoxylated derivatives of hydroxypropylacrylate, vinyl acetate, and mixtures thereof, the alkyl groups being C1 -C3 hydrocarbon chains.

The one or more hydrophilic anionic monomers, and eventually one or more hydrophilic non-ionic monomers/host polymer **P1** molar ratio is preferably between 1/99 and 99/1, more preferably between 20/80 and 60/40.

The IPN is obtained by inverse emulsion polymerization. Therefore, the IPN obtained is in an inverse emulsion **EMI-1.** This polymerization technique is well known to a person skilled in the art. It consists in emulsifying, in an oil phase, an aqueous phase containing the polymer **P1** and the hydrophilic monomer(s) to be polymerized. This emulsification is generally done using an emulsifying agent.

The oil phase can be a mineral oil, a vegetable oil, a synthetic oil or a mixture of several of these oils. Examples of mineral oils are those containing saturated hydrocarbons of the aliphatic, naphthenic, paraffinic, isoparaffinic, cyclo-paraffinic or naphthyl type. Examples of synthetic oils are hydrogenated polydecene or hydrogenated polyisobutene, esters such as octyl stearate or butyl oleate. Exxon's Exxsol^{®} product range is ideally suited.

In general, the weight ratio of aqueous to oil phase in the inverse emulsion **EMI-1** is preferably from 50/50 to 90/10.

Preferably, in step A, the **EMI-1** contains between 20% and 40% by weight of oil phase by weight of **EMI-1.**

When polymer **P1** is in inverse emulsion **EMI-0,** the oil phase of **EMI-0** and **EMI-1** are the same.

The inverse emulsion **EMI-1** advantageously comprises from 12 to 26% by weight of oil and from 35 to 48% by weight of water.

The term "emulsifying agent" refers to an agent capable of emulsifying water in oil. Generally speaking, an emulsifying agent is a surfactant with an HLB strictly less than 10.

The hydrophilic-lipophilic balance (HLB) of a chemical compound is a measure of its degree of hydrophilicity or lipophilicity, determined by calculating the values of the different regions of the molecule, as described by Griffin in 1949 (Griffin WC, Classification of Surface-Active Agents by HLB, Journal of the Society of Cosmetic Chemists, 1949, 1, pages 311-326).

Advantageously, the inverse emulsion **EMI-1** contains an emulsifying agent. The latter is advantageously selected in the group consisting of: polyesters with a molecular weight of between 1000 and 3000 g/mol, condensation products of a poly(isobutenyl) succinic acid or its anhydride and a polyethylene glycol, block copolymers with a molecular weight of between 2500 and 3500 g/mol, such as those sold under the Hypermer^{®} brand names, sorbitan extracts, such as sorbitan monooleate or polyoleates, sorbitan isostearate or sorbitan sesquioleate, polyethoxylated sorbitan esters, or diethoxylated oleoacetyl alcohol or tetraethoxylated laurylacrylate, condensation products of higher fatty alcohols than ethylene, such as the reaction product of oleic alcohol with 2 ethylene oxide units; condensation products of alkylphenols and ethylene oxide, such as the reaction product of nonyl phenol with 4 ethylene oxide units. Ethoxylated fatty amines such as Witcamide^{®} 511, betaine-based products and ethoxylated amine are also good candidates as emulsifying agents.

The inverse emulsion **EMI-1** advantageously comprises from 0.8 to 3% by weight of at least one emulsifying agent.

When polymer **P1** is in inverse emulsion **EMI-0,** the emulsifying agent of **EMI-0** and **EMI-1** are the same.

Preferably, in step A, the **EMI-1** contains between 0.1 and 10% by weight of emulsifying agent by weight of **EMI-1.**

In step A) of the method of the invention, conventional polymerization regulators can be added before the polymerization starts. The usual polymerization regulators are, for example, sulphur compounds such as thioglycolic acid, mercaptan alcohols, dodecyl mercaptan, amines such as ethanolamine, diethanolamine, morpholine and phosphites such as sodium hypophosphites. In the case of a RAFT-type polymerization, specific polymerization regulators such as those comprising a transfer group comprising the -S-CS- function, may be used. Mention may in particular be made of these compounds of the family of xanthates (-S-CS-O-), dithioesters (-S-CS-C), trithiocarbonates (-S-CS-S-), or dithiocarbamates (-S-CS-N). Among the compounds of the xanthate family, O-ethyl-S-(1-methoxy carbonyl ethyl)xanthate, is widely used for its compatibility with monomers of acrylic nature. Among the trithiocarbonates series, prefered compounds are 3-((((1-carboxyethyl)thio)carbonothioyl)thio)propanoic acid and 2 2'-carbonothioylbis(thio) bis 2-methylpropanoic acid.

The polymerization is carried out by radical route. It includes polymerization by free radicals by means of UV, azo, redox or thermal initiators as well as controlled radical polymerization (CRP) techniques or more particularly using the RAFT (Reversible Addition Fragmentation Chain Transfer) type.

The polymerization initiators may be any compound which dissociates into radicals under polymerization conditions, for example: organic peroxides, hydroperoxides, hydrogen peroxide, persulfates, azo compounds, and redox catalysts. The use of water-soluble initiators is preferred. In some cases, it is advantageous to use mixtures of various polymerization initiators, for example, mixtures of redox catalysts and azo compounds.

Suitable organic peroxides and hydroperoxides are, for example, sodium or potassium peroxodisulfate, acetylacetone peroxide, methyl ethyl ketone peroxide, tert-butyl hydroperoxide, cumene hydroperoxide, tert-amyl perpivalate, tert-butyl perpivalate, tert-butyl perneohexanoate, tert-butyl perbuto-butylate, -ethyl hexanoate, tert-butyl perisononanoate, tert-butyl permaleate, tert-butyl perbenzoate, tert-butyl per-3,5,5-trimethylhexanoate and tert-amyl per neodecanoate.

Appropriate persulphates may be selected from alkali metal persulphates such as sodium persulphate.

Suitable azo initiators are advantageously water-soluble and chosen from the following list: 2,2'-azobis-(2-amidinopropane) dihydrochloride, isobutyramidine 2,2'-azobis N,N'-dimethylene)dihydrochloride, 2-(azo(1-cyano-1-methylethyl))-2-methylpropane nitrile, 2,2'-azobis[2-(2'-dimidazolin-2-yl)propane] dihydrochloride and 4,4'-azobis (4-cyanovaleric acid). Said polymerization initiators are used in usual amounts, for example in amounts of 0.001 to 2%, preferably 0.01 to 1% by weight, relative to the monomers to be polymerized.

As an oxidizing component, the redox catalysts contain at least one of the above compounds and, as a reducing component, for example ascorbic acid, glucose, sorbose, hydrogen sulfite, sulfite, thiosulfate, hyposulfite, pyrosulfite or an alkali metal, metal salts, such as in the form of iron (II) ions or silver ions or sodium hydroxy methyl sulfoxylate. The reducing component of the redox catalyst preferably used is the Mohr's salt (NH₄)₂Fe(SO₄)₂, 6 H₂O. Based on the number of monomers used in the polymerization, 5 x 10⁻⁶ to 1 mole% of the reducing component of the redox catalyst system and 5 x 10⁻⁵ to 2 moles% of the oxidizing component of the redox catalyst can, as an example, be used. Instead of the oxidizing component of the redox catalyst, one or more water-soluble azo initiators can also be used.

Preferably the method may comprise the elimination of dioxygen in solution before the addition of polymerization initiators. The removal of dioxygen in solution is carried out by degassing or by addition of glucose oxidase.

The polymerization is carried out, in the absence of oxygen, by introducing the initiators in the appropriate order, known to those skilled in the art, into the solution to be polymerized. The initiators are advantageously introduced either in soluble form in aqueous medium or in the form of a solution in an organic solvent.

The polymerization in step A) may be carried out under isothermal, adiabatic or temperature-controlled conditions. When the polymerization is carried out under isothermal conditions, the temperature is kept constant, generally between 10 and 60°C. When the polymerization is carried out under adiabatic conditions, the temperature is left to increase naturally and in this case the reaction generally starts at a temperature below 15°C and the final temperature is generally above 50°C. When the polymerization is carried out under temperature-controlled conditions, the temperature increase is controlled so as to have a temperature curve between the isothermal curve and the adiabatic curve.

Advantageously, the temperature in the reaction vessel is kept between 10 and 60°C during 30 and 90 minutes, more preferably between 30 and 60 minutes.

### Step B)

At the end of the polymerization reaction, in step B), the inverse emulsion **EMI-1** may be diluted to form an inverse emulsion **EMI-2.**

The inverse emulsion **EMI-2** is prepared by adding and mixing an oil phase to the inverse emulsion **EMI-1.** The oil phase is chosen among the same list than the oil phases of **EMI-1** and **EMI-0.** Preferably, the oil phase of **EMI-2** has a boiling point below 250°C.

### Step C)

In step C), the inverse emulsion **EMI-1 or EMI-2** is spray-dried to obtain an IPN in powder form.

The process of spray-drying in step C) comprises the following steps:
- Atomization: The emulsion is fed into a spray dryer where it is atomized into fine droplets using a nozzle or rotary atomizer. This increases the surface area for drying.
- Drying: The atomized droplets are exposed to a stream of hot air in the drying chamber. The water phase evaporates, leaving behind dry polymer particles.
- Collection: The dried polymer particles are collected from the drying chamber, often using a cyclone separator or bag filter.
- Post-Processing: The collected polymer powder may undergo further processing, such as sieving or milling, to achieve the desired particle size distribution.

The IPN obtained by the method of the invention has preferably an average particle size comprised between 20 and 1500 µm, preferably between 30 and 300 µm. The average particle size means the average diameter measured with a laser particle sizer using conventional techniques that are part of the general knowledge of the skilled person.

Advantageously, the IPN in powder form obtained by the method of the invention is agglomerated to increase its particle size and facilitate its manipulation. The agglomerates may be obtained by extrusion; compaction, in a fluidized bed, pelletization and other techniques well known by the skilled person.

The invention also relates to a Bayer process for extracting alumina from bauxite, wherein the IPN in powder form obtained according to the method is used as flocculant to separate red mud from sodium aluminate aqueous solution.

Hydroxamic acid functions of the IPN are iron-selective and improve overflow clarity in the red mud separation stage of the Bayer process.

The following examples are provided to further illustrate the advantages and applications of the present invention, without limiting its scope

### EXAMPLES

The laboratory spray-dryer used in the Examples is a Minor Mobile 2000 Model H supplied by GEA Niro with the following characteristics:
- Chamber: 800 millimeters (mm) in diameter with a 620 mm vertical side and a 60-degree conical bottom
- Gaz Flow: Nominal gas flow is about 80 Nm³/h of nitrogen gas to provide an inert atmosphere.
- Gaz Temperature: Nominal inlet gas temperature is 180°C, the outlet gas temperature is dependent on the feed rate but should be over 100°C to ensure proper water evaporation.

The emulsion is fed at the center of the top of the chamber at a speed of about 5L/h (to be adjusted as a function of outlet gas temperature) using a Peristaltic pump. Emulsion is injected through a two-fluid nozzle for atomization. The residence time of the emulsion in the chamber is about 5 to 15 seconds.

The contact of the sprayed emulsion with hot nitrogen provided through a ceiling air dispenser promotes oil and water evaporation to get a product in powder form with a solid particle size of about 100 µm. The dried product is then separated from the nitrogen through a cyclone and collected into a dedicated vessel.

### Example 1: Synthesis of an IPN I1 according to the invention by polymerization of sodium acrylate in presence of a hydroxamic acid polymer P1A (P1A/sodium acrylate in a 25/75 molar ratio)

### a. Preparation of a polymer P1A in inverse emulsion EMI-0

A polymer **P1A** was prepared by polymerization of acrylamide followed by functionalization with hydroxylamine following the methods outlined in US Patent No. 4,767,540, with a hydroxamation degree of approximately 25%. The oil phase of the emulsion was Isopar J and was removed through spray-drying at the end of the process.

The polymer **P1A** in inverse emulsion **EMI-0** obtained has the following characteristics:
Active Content = 16.2 %
¹³C NMR Composition = 21 mol% Hydroxamate/ 58 mol% Sodium Acrylate / 21 mol% Acrylamide
Bulk Viscosity = 1060 cP (Brookfield viscosimeter, spindle LV3; 30 rpm; 23°C)
UL viscosity = 7.5 cP (Brookfield viscosimeter, polymer concentration: 1g.L⁻¹ in 1M NaCl, 23°C, UL spindle, 60 rpm)

### b. Preparation of the IPN 11 in inverse emulsion (EMI-1A) (step A)

500 g of the inverse emulsion **(EMI-0)** of polymer **P1A** is placed in a 1 L reactor equipped with a mechanical stirrer. The emulsion is stirred at 200 round per minutes (rpm) using a half-moon blade. 135 g of light oil (ISOPAR J) is then added. After homogenizing the mixture, 25 g of sorbitan monooleate (MOS) is added to the preparation, which is then left to stir.

In a 1 L beaker, 130 g of water is added, followed by the careful addition of 210 g of acrylic acid under magnetic stirring, ensuring the temperature increase remains below 30°C. Once the mixture is homogeneous, sodium hypophosphite (10 ppm relative to acrylic acid) and tert-butyl hydroperoxide (20 ppm relative to acrylic acid) are added to the preparation. The mixture is then poured onto the previously mentioned 1 L reactor under mechanical agitation (200 rpm). After 5 min of homogenization at 200 rpm the formed mixture is subjected to high shear mixing using a mixer to create an emulsion with particle sizes on the order of microns.

To initiate the polymerization of the acrylic acid contained within the aqueous droplets, a 2 g/L solution of metabisulfite is added at a rate of 10 mL/h over 45 min while keeping the temperature at 50°C. At the end of the reaction, 5 mL of a 10 g/L metabisulfite solution is added in a single shot to eliminate the residual acrylic acid and stop the polymerization.

The IPN **I1** in inverse emulsion **EMI-1A** has the following characteristics:
Active Content = 35.0 %
Molar ratio **P1A**/sodium acrylate = 25 / 75
Bulk Viscosity = 1250 cP (Brookfield viscosimeter, spindle LV3; 30 rpm; 23°C)
UL Brookfield Viscosity = 6.2 cP (Brookfield viscosimeter, IPN concentration: 1 g.L⁻¹ in 1 M NaCl, 23°C, UL spindle, 60 rpm)

### c. Preparation of the IPN I1 in powder form

Prior to spray-drying, the IPN **I1** in inverse emulsion **EMI-1A** is diluted with 20 wt% of Isopar J to reduce its bulk viscosity to 250 cP (step B). The emulsion is spray-dried using the Minor Mobil according to the procedure described above with standard provided conditions (step C).

The product obtained is an IPN **I1** in powder form with the following characteristics:
Dry content = 92.2%
Active Content = 79.9%
Molar ratio polymer **P1A**/acrylic acid = 25 / 75
UL Brookfield Viscosity = 6.3 cP (Brookfield viscosimeter, IPN concentration: 1 g.L⁻¹ in 1 M NaCl, 23°C, UL spindle, 60 rpm)

It should be noticed that the spray-drying step has no impact on the polymer structure as there is no modification of the UL Brookfield viscosity following the spray-drying step.

### Example 2: Applicative performances of the IPN according to the invention as red mud flocculant in the Bayer Process

The IPN **I1** in powder form was tested as a red mud flocculant for an industrial Bayer liquor, and its performances were compared with the polymer **P1A** in powder form **(P1A PF),** a homopolymer of sodium acrylate **P2A** in powder form **(P2A PF),** and a spray-dried blend of **P1A** and **P2A (PSD 1A+2A).** The homopolymer **P2A** has the same monomeric composition as the monomer to be polymerized in the preparation of the IPN **I1.**

The test procedure is as follows:
(i) Preparation of 3 g/L polymers solutions:
   · Add 1.5 g of polymer to 500 mL of caustic solution (15 g.L⁻¹ NaOH in water) with vigorous stirring.
   · The resulting solution is stirred for at least two hours to allow complete polymer release.
(ii) Decanting process:
   · Application tests are carried out using a 1 L graduated test tube, into which the sludge to be tested is introduced.
      § The industrial liquor is taken just before entering the high-temperature decanter (approx. 90°C).
   · The suspension is then homogenized using a high-performance plunger.
   · 50% of the polymer solution dose is added to the test tube.
   · 5 agitations are then performed with the perforated plunger
   · The second half of the polymer dose is then added.
   · 5 agitations are then carried out again with the perforated plunger · The solution is then left to settle freely:
      § Sedimentation rate is measured by the time taken to settle between the 900- and 700-mL graduations of the graduated cylinder. This time is then divided by the distance between these two units.
      § The clarity of the overflow is measured in NTU using a turbidimeter after 15 min of settling, by taking 5 mL of solution, 5 cm from the top of the solution.

The tests were carried out at 20, 30 and 40 g/t of polymer (or IPN) relative to the red mud solid. The dosages in the table are based on the product as is (Polymer + oil + surfactant)

**Table 1: Results of settling and turbidity of the polymer IPN I1 according to the invention vs polymers P1A and P2A in powder alone or added as a blend. CE = comparative example.**

| **Polymer** | **P1A PF (CE-1A)*** | | | **P2A PF (CE-2A)**** | | | **PSD 1A+2A*** (CE-3A)** | | | **IPN I1** | | |
|---|---|---|---|---|---|---|---|---|---|---|---|---|
| **Assay (g/t)** | 31 | 46 | 61 | 23 | 34 | 45 | 24 | 36 | 49 | 25 | 38 | 50 |
| **Settling speed (m/h)** | 3.5 | 8.1 | 15.0 | 9.6 | 11.1 | 15.8 | 8.1 | 10.5 | 14.5 | 9.7 | 12.8 | 17.2 |
| **Turbidity (NTU)** | 2240 | 1120 | 890 | NA | NA | 5830 | 5340 | 3780 | 2150 | 2930 | 1970 | 1160 |

| | | | | | | | | | | | | |
|---|---|---|---|---|---|---|---|---|---|---|---|---|
| *** P1A PF:** Obtained by spray-drying the emulsion of polymer **P1A** (example 1a). The product has the following characteristics: Dry content = 91.8%. Active Content = 65.1%. UL Brookfield Viscosity = 7.5 cP (Brookfield viscosimeter, polymer concentration: 1g.L⁻¹ in 1M NaCl, 23°C, UL spindle, 60 rpm). ** **P2A PF:** Sodium acrylate homopolymer in spray-dried form, commercially available, with about 88% active content *** blend of **PSD 1A** + **2A:** Product is obtained by the spray-drying of a mixture containing 40 wt% of the emulsion of polymer **P1A** (polymer content = 16.2%) and 60 wt% of a commercially available emulsion containing 35% of polymer **P2A.** | | | | | | | | | | | | |

The blend product has the following characteristics:
Dry content = 91.6%.
Active Content = 81.1%.
UL Brookfield Viscosity = 6.8 cP (Brookfield viscosimeter, polymer concentration: 1 g.L⁻¹ in 1 M NaCl, 23°C, UL spindle, 60 rpm).

The results show that the hydroxamic acid polymer **P1A PF** leads to good clarity with relatively slow settling rates **(CE-1A).** In contrast, the sodium acrylate homopolymer **(PSD P2A)** does not provide clarity but offers good settling rates **(CE-2A).**

The spray-dried blend of polymers **P1A** and **P2A (PSD 1A+2A)** helps mitigate these effects and results in a two-in-one product that provides both an acceptable settling rate and clarity. **(CE-3A).**

Surprisingly, the IPN **I1** in powder form according to the invention leads to a product that provides superior performance with a 20 % improvement of settling rate and 50 % improvement in clarity compared to the mixture **(PSD 1A+2A) (I1** vs **CE-3A).** A synergic effect is also observed when the polymers form an IPN in powder form.

### Example 3: C0₂ saving versus conventional emulsion

GWP100 stands for Global Warming Potential over a 100-year period. It is a measure used to compare the impact of different greenhouse gases on global warming. Specifically, it quantifies how much heat a greenhouse gas traps in the atmosphere over 100 years, relative to carbon dioxide (CO₂), which has a GWP of 1. For example, methane (CH₄) has a GWP100 of about 27-30, meaning it is 27-30 times more effective at trapping heat in the atmosphere over 100 years compared to CO₂.

The latest version of ISO 14067 is ISO 14067:2018. This standard specifies the principles, requirements, and guidelines for the quantification and reporting of the carbon footprint of products (CFP). It is consistent with International Standards on life cycle assessment (LCA), such as ISO 14040 and ISO 14044. ISO 14067:2018 focuses on a single impact category: climate change. It provides a framework for calculating the carbon footprint of a product, which includes all greenhouse gas emissions over the product's life cycle.

The Product Carbon Footprint (PCF) quantifies the total greenhouse gas (GHG) emissions directly and indirectly associated with the production of a given product. The PCF boundary follows a cradle-to-gate approach, encompassing all GHG emissions from raw material extraction, transportation to the manufacturing site, and final product manufacturing, excluding packaging. The system boundary terminates at the factory gate, omitting downstream emissions such as product distribution, usage, and disposal.

The emission factor calculations are based on a functional unit of 1 kg of unpacked product. To ensure comprehensiveness, a cut-off rule is applied, requiring that at least 95% of total mass and energy inputs are accounted for within the inventory. The transportation of raw materials to the manufacturing facility is incorporated using a multimodal approach, with distances estimated based on standard industry practices.

Emission data is determined using SNF's proprietary Product Carbon Footprint calculation tool, which adheres to internationally recognized standards and methodologies, including ISO 14067, the GHG Protocol, and Together for Sustainability (TfS). Our calculation tool utilizes primary data for internal production processes and for raw materials where suppliers have provided specific PCF values. For raw materials lacking supplier-specific PCF data, secondary data is sourced from established databases, such as ECOINVENT 3.11 and ADEME, or from relevant literature. Secondary data is selected based on alignment with manufacturing location, technological comparability, and temporal relevance.

According to the ISO 14067 standard on carbon footprint of products, the GWP100 (IPCC) of polymer production of the example and counter example are the following

**Table 2: Results of CO₂ emissions for an IPN in powder form according to the invention compared to the polymers P1A and P2A alone in powder form**

| **Polymer** | **IPN I1** | **P1A PF (CE-1A)** | **P2A PF (CE-2A)** |
|---|---|---|---|
| **CO₂ emissions (kg CO₂e/kg)** | 3.051 | 2.338 | 1.797 |

Thus, the CO₂ emissions of the treatments proposed in example 2 are as follows:

**Table 3: Results of CO₂ emissions for a blend of polymers P1A and P2A in inverse emulsion EMI (P1A+P2A) compared to the same mixture in powder form PSD 1A+2A.**

| **Polymer** | **EMI (P1A+P2A)** | | | **PSD 1A+2A (CE-3A)** | | |
|---|---|---|---|---|---|---|
| **Assay (g/t)** | 63 | 94 | 126 | 25 | 38 | 50 |
| **CO₂ emissions (g CO₂e)** | 122 | 183 | 243 | 76 | 114 | 153 |

Thus, the use of the IPN in powder form obtained by the method of the invention not only enhances performance but also reduces CO₂ emissions compared to a conventional treatment involving an emulsion mixture of polymers **(EMI (P1A + P2A))** achieving a reduction of approximately 40%.

Furthermore, the atomization of the emulsion mixture helps green the Bayer process. Indeed, through atomization, the oil contained in the emulsion is recovered and can be reused for a new synthesis, thereby reducing VOC emissions from the Bayer process. In contrast, using the emulsion mixture injects oil into the Bayer process, which is then degraded into humates that act as a poison in the process by degrading the quantity and quality of the bauxite obtained.

## Claims

1. A method for preparing an interpenetrated polymer network (IPN) in powder form, comprising the following successive step:
A) Preparing an inverse emulsion **EMI-1** of an IPN by polymerization of one or more hydrophilic anionic monomer(s) and optionally one or more hydrophilic non-ionic monomer(s) in the presence of a water-soluble hydroxamic acid polymer **P1;**
wherein polymer **P1** has an average molecular weight Mw of at least 1 million Dalton;
wherein the polymerization is carried out at a temperature of between 40°C and 60°C during 30 minutes and 60 minutes;
B) Optionally, preparing an inverse emulsion **EMI-2** by adding and mixing an oil phase to the inverse emulsion **EMI-1;**
C) Spray-drying the inverse emulsion **EMI-1 or EMI-2** to form an IPN in powder form.

2. Method according to claim 1, wherein polymer **P1** is an anionic polymer containing one or more hydrophilic non-ionic monomers.

3. Method according to claim 1 or 2, wherein polymer **P1** is an anionic polymer containing (meth)acrylamide as hydrophilic non-ionic monomer.

4. Method according to any one of the preceding claims, wherein **P1** has an average molecular weight Mw of between 1 million and 40 million Daltons.

5. Method according to any one of the preceding claims, wherein, in step A), the polymer **P1** is in inverse emulsion **EMI-0.**

6. Method according to any one of the preceding claims, wherein, in step A), polymer **P1** is an anionic polymer containing (meth)acrylamide as hydrophilic non-ionic monomer and the polymer **P1** is in inverse emulsion **EMI-0**

7. Method according to any one of the preceding claims, wherein, in step A), the polymer **P1** is in inverse emulsion **EMI-0,** said **EMI-0** containing between 20% by weight and 80% by weight of polymer **P1.**

8. Method according to any one of the preceding claims, wherein, in step A), the one or more hydrophilic anionic monomers, and eventually one or more hydrophilic non-ionic monomers/ polymer **P1** molar ratio is between 1/99 and 99/1.

9. Method according to any one of the preceding claims, wherein, in step A), the one or more hydrophilic anionic monomers, and eventually one or more hydrophilic non-ionic monomers/ polymer **P1** molar ratio is between 20/80 and 60/40.

10. Method according to any one of the preceding claims, wherein the hydrophilic anionic monomer is sodium (meth)acrylate or ammonium (meth)acrylate.

11. Method according to any one of the preceding claims, wherein the hydrophilic anionic monomer is sodium (meth)acrylate.

12. Method according to any one of the preceding claims, wherein polymer **P1** is an anionic polymer containing (meth)acrylamide as hydrophilic non-ionic monomer and the hydrophilic anionic monomer is sodium (meth)acrylate or ammonium (meth)acrylate.

13. Method according to any one of the preceding claims, wherein before polymerization, the inverse emulsion **EMI-1** is degased or treated by addition of glucose oxidase to remove any dissolved dioxygen.

14. Bayer process for extracting alumina from bauxite, wherein the IPN in powder form obtained according to the method of any one of claims 1 to 13, is used as flocculant to separate red mud from a sodium aluminate aqueous solution.
